# EUROPEAN PATENT APPLICATION

(11) **EP 3 246 288 A1**
(43) Date of publication of application: **22.11.2017**
(21) Application number: 16001129.2
(22) Date of filing: 18.05.2016
(51) Int. Cl.: C01F 7/02, C22B 1/243

(54) **PROCESS FOR PRODUCING AN AGGLOMERATED CRUDE BAUXITE, AN AGGLOMERATED BAUXITE AND USE THEREOF FOR PRODUCING A SMELTER GRADE ALUMINA**

(71) Applicant: Rio Tinto Alcan International Limited, Montréal, Québec H3B 0E3 (CA)
(72) Inventor: Backhouse, Nigel, Queensland, 4151 (AU); Grocott, Stephen, Victoria, 3113 (AU)
(74) Representative: Mérigeault, Thierry Louis Henri

(57) **Abstract**

The present describes a process for producing a bauxite agglomerate comprising: providing a crude bauxite having a fine particle size and an initial weight % of water as a feed bauxite, optionally screening said feed bauxite or pre-screening at least part of said crude bauxite, optionally adjusting the weight % of water of the feed bauxite; providing a cement binder; mixing a feedstock bauxite based on said feed bauxite with the cement binder in at least one mixer under intensive mixing conditions producing a bauxite binder mixture; and curing the bauxite binder mixture for a cure time thereby allowing the cement binder through a reaction with the water in the bauxite binder mixture to cure and form the bauxite agglomerate. The process enhancing the value of crude bauxite, by producing a transportable agglomerated crude bauxite from a fine non-calcined bauxite. The bauxite agglomerate serving as an intermediate product for producing a smelter grade alumina.

## Description

### TECHNICAL FIELD

The present invention concerns enhancing the value of fines of crude bauxite with a process for producing an agglomerated crude bauxite, the crude bauxite agglomerate, a process for producing a smelter grade alumina from the agglomerated crude bauxite, and the use of the agglomerated crude bauxite for producing smelter grade alumina (SGA).

### BACKGROUND ART

Crude bauxite from a mine, typically, has a broad particle size distribution that may include a large fraction of fine particles. The fineness and moisture content can contribute to the bauxite exhibiting a "wet and sticky" behaviour, that is undesirable in both mining and refining operations, as these properties contribute to material handling difficulties and operating time losses. The mined crude bauxite is often processed to improve its bulk materials handling characteristics and/or its grade by impurity removal. The characteristics or quality of mined crude bauxite ore can be improved by relatively simple and inexpensive processes, where these processes are known as "beneficiation", and include unit operations such as: washing, wet sizing and screening, gravity concentration and mechanical or manual sorting. This "beneficiation" generally relates to the removal of finer particles.

Beneficiating crude bauxite increases the median particle diameter of bauxite and reduces the amount of material that needs to be transported and processed at the alumina refinery. However, beneficiating consumes energy and water and significant cost is associated to the management of the fine waste tailings produced. For some bauxite ore bodies beneficiation for purely improving handleability may lead to the important losses of the fine bauxite material having a high alumina concentrations. In some bauxite ore bodies the losses of fine crude bauxite may be substantial, where up to 25 % of the bauxite beneficiated may be sent to a tailings storage facility.

Transporting bauxite can generate further fines during handling operation. As previously mentioned, this fineness decreases the bauxite's tendency to flow easily, especially at critical moisture concentration. It is known that crude bauxite alone with water can be agglomerated, with the fine bauxite portion serving as binder. However this type of bauxite agglomerate is weak, and susceptible to deformation and disintegration at low consolidating loads. That is, in material handling/transport steps, these bauxite-only agglomerates easily break-down to re-generate fine bauxite material. This type of bauxite agglomerate (free of non-bauxite binder) will also disintegrate at least partially when exposed to further moisture or desiccation. Agglomerating crude mined bauxite may address some of these issues.

CA 569,730 discloses a process for agglomerating bauxite fines, with water, a binding agent (alkali metal hydroxides), at ambient temperature (where heat treatment is optional), in a mixer (pug mill, kneader, miller mixer).

US 2,167,432 discloses that non-granular materials are formed into substantially spherical or globular aggregates. In US 2,167,432, bauxite fines are considered, including adjusting water in the material, until the material can be squeezed into flakes, the water may contain binders such as calcium chloride, calcium nitrate, caustic soda, gypsum, sugar, and the like.

US 5,560,876 teaches a process for producing agglomerates from industrially processed dusts by mixing with an aluminium oxide binder to facilitate the handling of such dusts. The binder includes electrostatic precipitator dusts containing predominantly gibbsite and sub alpha alumina. US 5,560,876 relies on water and a binder containing an undercalcined alumina to bind the dust particles.

WO 2009/004565 discloses a desulphurising flux agglomerate comprising alumina dross combined with ordinary Portland cement (OPC). Agglomerates of this desulphurising flux with OPC are from 3 to 60 mm in diameter. The alumina dross of such desulphurising flux is not non-calcined bauxite.

### OBJECT OF THE INVENTION

There remains a need to improve the material handling properties of crude bauxite and preferably without a beneficiation of the crude bauxite.

An object of the invention is to offer a way of making previously unused fine bauxites or bauxite tailings into a valuable resource. In other words, an object of the invention is to recover higher alumina grade bauxite tailings that may have a fine average particle size of less than 0.5 mm, usually derived from beneficiation.

A further object of the invention is to produce a crude bauxite agglomerate at low temperatures so as to be used directly as a raw material for a Bayer process alumina refinery.

### SUMMARY OF THE INVENTION

In one aspect there is provided a process for producing a bauxite agglomerate comprising: providing at least one crude bauxite having an initial weight % of water as a feed bauxite; optionally screening said feed bauxite or pre-screening at least part of said crude bauxite to bypass coarse particles around said process; optionally adjusting a weight % of water of the feed bauxite after an optional screening or pre-screening, the process is characterized by providing a cement binder and a feedstock bauxite based on said feed bauxite, after the optional screening or pre-screening and/or after an optional water adjustment; mixing the feedstock bauxite with the cement binder in at least one mixer under intensive mixing conditions producing a bauxite binder mixture; and curing the bauxite binder mixture for a cure time thereby allowing the cement binder through a reaction with the water in the bauxite binder mixture to cure and form the bauxite agglomerate.

The at least one crude bauxite according to the present invention can have a median particle size of less than 3 mm.

The at least one crude bauxite according to the present invention can have more than 10 weight % of particles having a particle size of less than 0,5 mm.

According to one embodiment, the at least one crude bauxite used as feed bauxite can comprise crude mined bauxite, that is to say crude as-mined bauxite or non-beneficiated bauxite. The feed bauxite can contain at least 90 weight % of crude mined bauxite. The feed bauxite can be essentially based on crude mined bauxite.

When the feed bauxite contains at least 90 weight % of crude mined bauxite, it can comprise a fraction of fine particles having a particle size of less than or equal to 0.5 mm. More precisely, as illustrated in Table 1 hereafter, the fraction of fine particles varies according to where it was mined from and to the type of crude mined bauxite. Table 1 provides an illustration of the variability of crude mined bauxite fines content having a particle size of less than 0.3 mm, in the case when it is extracted from Cape York mine in Australia. In a feed bauxite that contains at least 90 weight % of crude mined bauxite the content of fine particles having a particle size having of less than or equal to 0.5 mm can vary from anywhere between 10 to more than 90 weight %.

The process according to the present invention can generally be used for agglomerating and producing strong agglomerates from any type of feed of crude bauxite having any particle size distribution. However, it is preferable to know in advance this particle size distribution before conducting the required moisture and binder adjustments during the process.

Coming back to the case when the feed bauxite contains at least 90 weight % of crude mined bauxite, it is preferable that mine planning, recovery and blending are conducted so that to obtain a given fine particle content allowing the production of agglomerates as strong as possible. In this case, the use of feed bauxite with more than 20 weight % and less than 30 weight % of fine particles having a particle size of less than 0.3 mm is particularly preferable to produce such strong agglomerates.

According to another embodiment, the at least one crude bauxite used as feed bauxite can comprise crude bauxite tailings, in particular a beneficiated fine crude bauxite tailings. The feed bauxite can contain at least 90 weight % of crude bauxite tailings. The feed bauxite can be essentially based on crude bauxite tailings.

When the feed bauxite contains at least 90 weight % of crude bauxite tailings, it can have an average particle size of less than or equal to 0.5 mm. In this case, the feed bauxite can comprise a fraction of fine particles having a particle size of less than or equal to 0.5 mm, which can be equal to at least 90 % w/w.

According to another embodiment, the feed bauxite can comprise a mixture of the above-defined feeds of crude mined bauxite and crude bauxite tailings.

When the feed bauxite contains at least 90 weight % of a blend of crude mined bauxite and crude bauxite tailings, said feed bauxite can comprise a fraction of fine particles having a particle size of less than or equal to 0.5 mm, and preferably less than or equal to 0.3 mm, which can be in the range of 10 to 90 % w/w, preferably 20 to 50 % w/w, and more preferably 20 to 30 % w/w.

In a preferred embodiment of the process provided herein said providing of the crude bauxite is characterized by recovering a crude mined bauxite.

In a preferred embodiment of the process provided herein, said providing of the crude bauxite is characterized by a blending of a crude mined bauxite and fine crude bauxite tailings.

In a preferred embodiment of the process provided herein, the crude mined bauxite and the fine crude bauxite tailings are further blended with a coarser crude or beneficiated bauxite. Coarser crude bauxite is generally understood as having less than 10 weight % of particles having a particle size of less than 0.3 mm.

According to the process of the present invention, it can include a screening step of the feed bauxite or a pre-screening step of at least part of crude bauxite in said feed bauxite, in order to bypass coarse particles around said process. This provides opportunities for saving capital, energy and binder.

Preferably, the screening or pre-screening is adjusted to bypass coarse particles having a particle size of more than 5 mm.

Preferably, the weight % of water in the feedstock bauxite, after an optional water adjustment, is between 10 and 30 % w/w,

More preferably, the weight % of water in the feedstock bauxite, after an optional water adjustment, is:
- between 10 and 20 % w/w, preferably 12 and 15 % w/w, more preferably 12 and 14 % w/w, or most preferably approximately 13 % w/w, when the feed bauxite comprises at least 90 weight % of crude mined bauxite, more preferably when the feed bauxite contains from 20 to 30 weight % of particles having a particle size of less than or equal to 0.3 mm,
- between 15 and 30 % w/w, preferably approximately 18 to 20 % w/w, when the feed bauxite comprises at least 90 weight % of crude bauxite tailings, more preferably when the feed bauxite contains at least 90 weight % of particles having a particle size of less than 0.5 mm,
- between 10 and 30 % w/w, when the feed bauxite comprises at least 90 weight % of a blend of crude mined bauxite and crude bauxite tailings.

In a preferred embodiment the provided process is characterized in that said adjusting of the weight % of water is by adding water to the feed bauxite.

In a preferred embodiment the provided process is characterized in that the cement binder is Portland cement, preferably a general purpose ordinary Portland cement.

In a preferred embodiment the provided process is characterized in that the Portland cement has a specific surface area or Blaine fineness from about 300 to about 500 m²/kg.

In a preferred embodiment, the cement binder mixed with the feedstock bauxite, after an optional water adjustment, is in a range of 0.5 to 7 % w/w of the bauxite binder mixture. More preferably, the cement binder mixed with the feedstock bauxite, after an optional water adjustment, is in a range of:
- 0.5 to 5 % w/w, preferably 1 to 4 % w/w, and more preferably approximately 2 % w/w of the bauxite binder mixture, when the feed bauxite comprises at least 90 weight % of crude mined bauxite, more preferably when the feed bauxite contains from 20 to 30 weight % of particles having a particle size of less than or equal to 0.3 mm, and
- 2 to 7 % w/w, preferably approximately 4 % w/w of the bauxite binder mixture, when the feed bauxite comprises at least 90 weight % of crude bauxite tailings, more preferably when feed bauxite contains at least 90 weight % of particles having a particle size of less than 0.5 mm.

In a preferred embodiment the provided process is characterized in that the at least one mixer comprises an intensive mixer. A mixer can also be referred to as an agglomerator.

Preferably, the intensive mixer is operated in such a way that intensive mixing is applied. Preferably, the intensive mixer is provided with an agitator, and the agitator rotation is set at a value of less than or equal to 5000, more preferably less than 1800, and even more preferably about 900 rpm. The intensive mixer can also have a rotating pan, and the rotating pan speed can be preferably set at more than 42 rpm, more preferably at about 84 rpm. Under these agitation conditions, it homogenizes the feedstock bauxite, the binder and the water present in the mixture. These speeds are preferable as they effectively achieve appropriately sized and compact agglomerates with desired strength and robustness. In a preferred embodiment the mixing time is less than or equal to 10 minutes; in another embodiment the mixing time is less than or equal to 5 minutes; in a preferred embodiment the mixing time is less than or equal to 3 minutes; in a particularly preferred embodiment the mixing time under intensive conditions is about 2 minutes.. For example, the intensive mixer can be an apparatus referred to as Eirich R02™, manufactured by Maschinenfabrik Gustav Eirich GmbH & Co KG of Hardheim, Germany. The intensive mixer can be any other type of mixer able to provide intensive mixing.

In a preferred embodiment the provided process is characterized in that the at least one mixer comprises a second mixer agglomerating the bauxite binder mixture from the at least one mixer under milder mixing conditions. The milder mixing conditions of the second mixer can improve the shape and consistency of agglomerates produce in the high intensity mixing step.

In a preferred embodiment the provided process is characterized in that the mild mixing conditions are produced by the second mixer, which is a drum agglomerator, preferably operating at about 30 rpm.

In a preferred embodiment the provided process is characterized in that the bauxite binder mixture is discharged after the mixing into a stockpile.

In a preferred embodiment the provided process is characterized in that the cure time is at least 1 to 24 hours, more preferably at least 24 hours, and most preferably from 1 to 7 days. The temperature of curing can be anything around ambient temperature, for example about 25 °C

In another aspect there is provided a bauxite agglomerate produced by the process described herein.

In further aspect there is provided a flowing bauxite agglomerate characterized by a composition of: 63 to 89.5 % w/w of dry crude bauxite, 0.5 to 7 % w/w of dry cement binder, and a moisture of 10 to 30 % w/w.

According to an embodiment of the invention wherein the crude bauxite feedstock contains at least 90 weight % of crude mined bauxite, the flowing bauxite agglomerate can be characterized by a composition of 75 to 89.5 % w/w of dry crude bauxite feedstock, 0.5 to 5 % w/w of dry cement binder, and a moisture of 10 to 20 % w/w, preferably 13 to 17 % w/w, for example with a dry crude bauxite feedstock containing from 20 to 30 weight % of particles having a particle size of less than or equal to 0.3 mm.

According to another embodiment of the invention wherein the crude bauxite feedstock contains at least 90 weight % of crude bauxite tailings, the flowing bauxite agglomerate can be characterized by a composition of: 63 to 83 % w/w of dry crude bauxite feedstock, 2 to 7 % w/w of dry cement binder, and a moisture of 15 to 30 % w/w, preferably 18 to 20 % w/w, for example with at least 90 weight % of particles of the dry crude bauxite feedstock having a particle size of less than 0.5 mm.

In a further aspect, the flowing bauxite agglomerate can be characterized by a median agglomerate size of approximately 3 to 8 millimeters. This size range can be or usually is within the same order of magnitude of the median particle size of beneficiated bauxite that is easily handled through existing bauxite supply chain infrastructure.

In a preferred embodiment the flowing bauxite agglomerate is characterized by a Durham Cone flowability index of less than 1.0 s/kg, preferably of less than 0.6 s/kg and most preferably by a Jenike Shear Cell flowability index of more than 4.

In a preferred embodiment the flowing bauxite agglomerate is characterized in that it is cured.

In a preferred embodiment the flowing bauxite agglomerate is characterized in that it is a green bauxite binder mixture.

In yet another aspect there is provided a use of a bauxite agglomerate described herein, in a Bayer process producing alumina, characterized in that feeding the bauxite agglomerate to an alumina refinery and optionally mixing the bauxite agglomerate with a beneficiated bauxite.

In a further aspect there is provided a process for producing a smelter grade alumina characterized in that the feedstock to the refinery is a bauxite agglomerate described herein, or further produced by the process described herein.

### BRIEF DESCRIPTION OF THE DRAWINGS

The following drawings are included to illustrate non-limiting embodiments of the process of the present invention:
Fig. 1 is a process block diagram of a crude bauxite agglomeration process according to one embodiment, wherein a feed bauxite of different sources of crude bauxite can optionally be screened to bypass coarse particles around said process.
Fig. 2 is process block diagram of a crude bauxite agglomeration process according to another embodiment, which includes most of the features of the embodiment represented in Fig. 1, and wherein at least some of the different sources of crude bauxite can optionally be pre-screened before being combined together to form a feed bauxite.

### DEFINITIONS AND ABBREVIATIONS

An agglomerate is a product of a size enlargement process, and may be in the shape of a pellet, ball or granule, herein the product is a crude bauxite agglomerate.

Agglomeration is a process of size enlargement where finer particles are gathered and become a larger shape in which individual particles are distinguishable.

A binder is an additive used during agglomeration, which provides bonding strength to ensure robustness and permanency of the agglomerate shape and size.

A crude bauxite is defined herein as a non-calcined bauxite that has not been heat treated, at temperatures above 100°C, where the bauxite can begin to undergo dehydroxylation reactions from gibbsite to boehmite and other transitional aluminium oxides. The crude bauxite may be heat treated at low temperature to remove moisture, for example in ranges of temperature between 50 and 100°C.

The current crude Australian bauxite studied can be found in one of five fineness categories or "Types" having the particle sized elaborated in Table 1 here-below.

**Table 1- Australian crude bauxite categories by fines content**

| **Type** | **Weight % of particles having a particle size less than 0.3 mm** |
|---|---|
| **1** | Below 10 |
| **2** | 10 to 20 |
| **3** | 20 to 30 |
| **4** | 30 to 40 |
| **5** | Over 40 |

Classifications for Portland cements are covered under standards ASTM C150/C150M-16, EN 197-2011 and AS 3972-2010 and are referenced as covering the range of the preferred embodiments described herein. For example Ordinary Portland cement oxide composition ranges, for types I-V under ASTM C150, are defined by Kosmatka et al as: CaO 60.2 - 66.3wt%, SiO2 18.6 - 23.4 wt%, Al2O3 2.4 - 6.3 wt%, Fe2O3 1.3 - 6.1 wt%, MgO 0.6 - 4.8 wt%, Na2O 0.05 - 1.20 wt%, K2O (Na2O equivalent), SO3 1.7 - 4.6 wt%.

An intensive mixer usually provides a high intensity mixing, which can be defined herein as an energetic agitation, such as an energetic agitation provided by an agitator rotating from a few hundred rpm up to 5000 rpm. An intensive mixer can be provided with an agitator which can rotate at the above-mentioned range of speed. An intensive mixer can also be provided with a rotating pan.

The optional second mixer that produces milder mixing conditions can be any type of mixer for achieving such mixing, such as a drum agglomerator or similar unit. Within the context of the present invention, the second mixer can optionally be operated under high intensity mixing, as long as the mixing is milder than the intensive mixing produced by the intensive mixer. Ageing or curing of the agglomerate is related to a time required for solidification reaction in an agglomerate to occur. This can occur with a preliminary solidification permitting transfer of the agglomerate to storage, followed by a slower reaction completing the strengthening of the agglomerate that occurs in storage.

A green bauxite binder mixture is defined herein as a mixture of bauxite and binder that has attained a certain hardness, but where curing/hardening is incomplete. The term "green" is defined herein as partially or incompletely cured.

A "flowing" bauxite agglomerate may be a "green bauxite binder mixture" or a "dry" and/or cured agglomerate. "Flowing" when used in terms of the mixture or agglomerate is understood and benchmarked with, i.e. compared to, a beneficiated bauxite sample, i.e. reference samples, having a granulometry and properties that are known to pass through the supply chain of an existing plant and characterised under standardised engineering test methodology such as ASTM D67128-16. A "flowing" agglomerate is defined as having the same and/or similar flow characteristics to that of the beneficiated bauxite, and "flowing" freely and/or without difficulties in the existing plant and onto a Bayer refinery.

TSF is defined herein as a "Tailing Storage Facility", that is generally a manmade dam into which tailings are stored. In one embodiment described herein the tailings are fine material from a beneficiation.

### DETAILED DESCRIPTION OF THE PREFERRED EMBODIMENTS

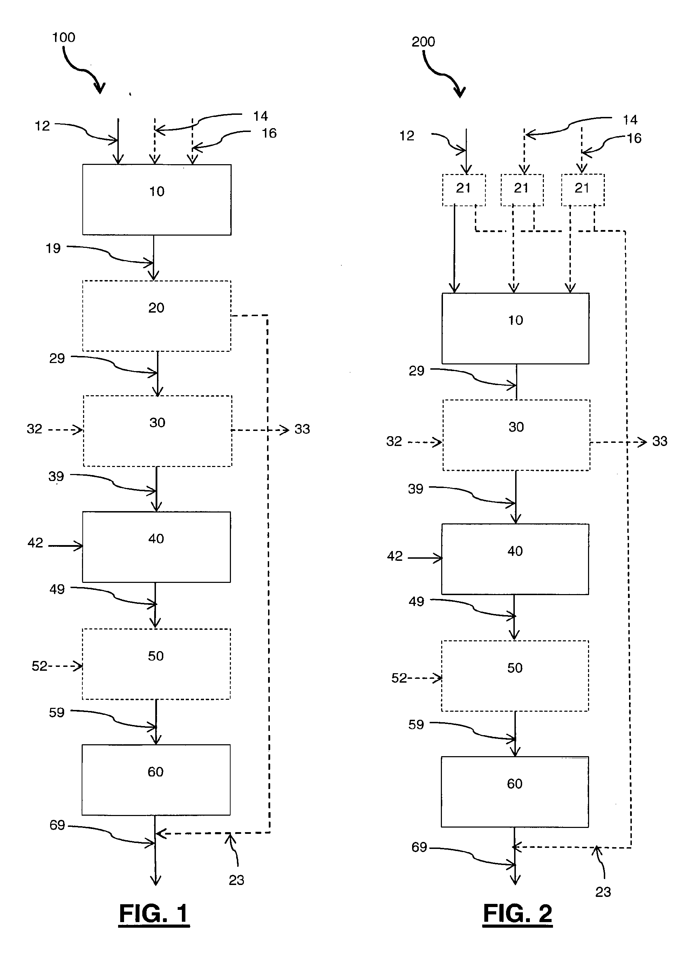

A crude bauxite agglomeration process 100, 200 according to a first or second embodiment described herein are illustrated by the process block diagrams presented respectively in Fig. 1 and Fig. 2.

The bauxite agglomeration process 100 may be used with a variety of crude bauxites alone or in combination. In other words, a variety of sources of crude bauxite can be used alone or in combination. In a first step 10, at least one crude bauxite is provided or selected or several crude bauxites are combined to form a feed bauxite 19, 29.

In a preferred embodiment, the feed bauxite 19, 29 for the agglomeration process 100, 200 derives directly from a crude mined bauxite 12 that has not been beneficiated. The present process 100, 200 has the advantage of eliminating or minimizing the need from beneficiation of the crude mined bauxite 12. The crude mined bauxite 12 has a wide particle size distribution that includes the necessary fine fraction usually required for agglomeration.

In another preferred embodiment, the feed bauxite 19, 29 may derive completely from a beneficiated fine crude bauxite tailings 14.

Other variations for the feed bauxite are also possible, such as a mixture of the crude mined bauxite 12 and the beneficiated fine crude bauxite tailings 14. For example, the feed bauxite based on such a mixture comprises a fraction of fine particles having a particle size of less than or equal to 0.5 mm that can be 10 to 90 % w/w, preferably 20 to 50 % w/w, and more preferably 20 to 30 % w/w . Further crude bauxites 16, including those that have been beneficiated, may be used for targeting any particular requirements, as far as particle size distribution, agglomerates composition and/or moisture content are concerned. The crude bauxite(s) 12, 14 and/or 16 are all understood to be non-calcined.

The crude mined bauxite 12 has a broad average particle size that includes a significant fraction of fine particles having a particle size of less than 0.5 mm and a fraction of coarser particles having a particle size greater than 0.5 mm that may be coated by at least part of the said fraction of fine particles.

Fine crude bauxite tailings 14 have a median particle size that is less than or equal to 1 mm, preferably less than or equal to 0.5 mm, and more preferably less than or equal to 0.3 mm.

When another source of crude bauxite is used, a coarser crude bauxite 16 may be preferred. Up to 10 weight % of the coarser crude bauxite may have a particle size of less than 0.3 mm.

In a preferred embodiment the feed bauxites 12, 14 and/or 16 in combination comprise a fraction of fine particles having a particle size of less than or equal to 0.5 mm, preferably less than or equal to 0.3 mm fraction, that is from 10 to 90 % w/w, preferably from 20 to 50 % w/w, and more preferably from 20 to 30 % w/w.

The feed bauxites 12, 14 and/or 16 alone or combined have a known weight % of water. The weight % of water varies depending on the time of year when the bauxites were mined, and whether they required beneficiation. The weight % of water of the feed bauxites generally varies from 5 % to 30 %. Additionally processed crude bauxite, i.e. solar drying or low temperature thermal drying, with extremely low moistures between 0 and 5 % could be also be used as feed bauxite.

Therefore, the feed bauxite 19, 29 fed to the agglomeration process 100, 200 can be obtained from one or more types of provided crude bauxites.

The process 100, 200 illustrated in Fig. 1 and 2 have an optional screening steps in order to bypass coarse particles 23 around said process. These screening steps being optional, they are shown with dotted lines.

In the embodiment of Fig. 1, the feed bauxite 19 can be screened in separation means 20, which can be any type of separation means adapted to crude bauxite. From the separation means, coarse particles, preferably having a particle size of more than 5 mm are transferred and mixed with the produced agglomerates. The stream of bauxite with no coarse particles is used as feed bauxite 29 in the process 100.

In the embodiment of Fig. 2, each source of the crude bauxite 12, 14 and 19 can be pre-screened by using separation means 21. From the separation means, coarse particles, preferably having a particle size of more than 5 mm are transferred and mixed with the produced agglomerates. The streams of bauxite with no coarse particles are combined in step 10 of the process 200, before being used as feed bauxite 29 in the process 100.

The agglomeration process 100, 200 may require a water adjustment step 30 of the feed bauxite 29, as shown in Fig. 1 and 2 with dotted lines indicating its optional nature. The water adjustment depends on the known initial weight % of water in the feed bauxite 29. The initial weight % of water in the feed bauxite 29 can be between 5 and 30 % w/w; preferably 12 to 15 % w/w; more preferably 12 to 14 % w/w, most preferably about 13 % w/w, more particularly for a feed bauxite having from 20 to 30 weight % of particles that have a particle size of less than or equal to 0.3 mm. If more than one crude bauxite is being blended to become the feed bauxite 29, then the humidity or the weight % of water in of the crude bauxite(s) 12, 14 and/or 16 would preferably have to be assessed.

The humidity in the feedstock bauxite 29 can be adjusted by adding water 32 if required or alternatively water 33 can be removed. For example, the feedstock bauxite 39, after an optional water adjustment 30, has a preferred range of humidity from between 10 to 20 % w/w; preferably 12 to 15 % w/w, more preferably 12 to 14 % w/w, most preferably 13 % w/w, more particularly for a feedstock bauxite having from 20 to 30 weight % of particles that have a particle size of less than or equal to 0.3 mm.

It is understood that if the weight % of water is not adjusted in step 30, the streams of the feed bauxite 19, 29 and feedstock bauxite 39 have the same properties, and are therefore identical.

It is understood that the crude bauxite, whether it is mined crude bauxite or crude bauxite tailings or a mixture of both, is a non-calcined bauxite, that is to say free of heat treatment that affects the bauxite mineralogy. High temperature-heat treated bauxite is not amenable to serving as a feed for a Bayer refinery and the production of alumina. However, drying the bauxite at low temperatures, such as 100°C or less, is acceptable.

A maximum bulk strength of the bauxite agglomerate is achieved at a certain moisture level. In the ranges on either side of this moisture level, the bulk strength will approach the maximum and then wane. The maximum bulk strength moisture is dependent on the fineness of the bauxite as the increased surface area of fine bauxite increases ability to retain higher moistures. Therefore, when the feed bauxite 19, 29 is derived from primarily crude bauxite tailings 14, i.e. having at least 90 weight % of particles having a particle size of less than or equal to 0.5 mm, the water adjusted feedstock bauxite 39 has a preferred moisture from between 15 and 30 % w/w and more preferably approximately 18 to 20 % w/w.

The feedstock bauxite 39, after the optional adjustment of humidity, is then transferred to a mixing step 40. In this mixing step 40, the feedstock bauxite 39 and a cement binder 42 are mixed to produce a green (incompletely-cured) bauxite binder mixture 49. The mixing step 40 is generally understood to be at least one high intensity mixing, imparting high energy to the mixture of feedstock bauxite 39 and binder 42 and homogeneously mixing these two components with the water present. The mixing step 40 is, in a preferred embodiment, performed by a high speed mixer that may have one or more impellors, blades or ploughs, and may further include a counter-rotating vessel. Depending on the feedstock bauxite 39, i.e. its particle size distribution and moisture content, binder 42 and the type of mixer, i.e. its design which also impacts the amount of energy transferred to solids in the agglomeration process, the mixing time required to achieve a homogeneous mixture will vary.

There is no limitation with regard to the selection of other mixer technology or process configurations, which would achieve equivalent green bauxite binder mixture agglomerates.

In the mixing step 40, the feedstock bauxite 39 and the cement binder 42 are mixed based on the weight % of water and become the bauxite binder mixture 49 and wherein the cement binder 42 is in a range of 1 to 7 % w/w of the feedstock bauxite 39.

The cement binder 42 is usually a dry Portland cement, such as a General Purpose Portland cement as described by AS 3972-2010.

The General Purpose Portland cement binder 42 has a typical specific surface area (or Blaine fineness) from about 300 to about 500 m²/kg.

Finer Blaine cement was trialled and produced agglomerates of unsatisfactory performance. Whilst not wishing the invention to be limited to any particular theory, it is believed the hydration reactivity of the very fine cement is too fast and lead to poor distribution throughout the agglomerate.

OPC has been tested and was found to have no or very little downstream detrimental impact on alumina refining in the preferred usage range. Other Portland cement types, alternative hydraulic cement formations or non-cement inorganic or organic binders could also be used in the spirt of the invention.

As previously mentioned, the high intensity mixing step 40 of feedstock bauxite 39 and cement binder 42 produces a green (incompletely-cured) bauxite binder mixture 49 having a homogeneous composition with regard to both moisture and cement binder. Under certain conditions the intensive mixing 40 produces a mixture 49 that may have a non-ideal shape or particle size uniformity. In this case, the process 100, 200 may be followed by an optional (represented in Fig. 1 and 2 in dotted lines) gentler mixing step 50, where a further binder 52 may optionally be added, to produce further green bauxite binder mixture 59.

The binder 52 may be the same or different as cement binder 42. The gentler low intensity step 50 is meant to smooth out the agglomerates produced. In a preferred embodiment, step 50 is conducted in a drum agglomerator. Step 50 helps by work hardening the surface of the agglomerate mixture 49 to strengthen it. Step 50 may also help to provide a more uniform particle distribution of the agglomerates. It is understood that if there is no gentler mixing step 50, that the green (incompletely-cured) bauxite binder mixture 49 and 59 are equivalents. Step 50 although preferred is not obligatory.

The green bauxite binder mixture 59 is then discharged into a stockpile where the final step curing/ageing 60 is completed and thereby produces a bauxite agglomerate 69 that is cured to some extent. Curing begins immediately upon mixing the cement binder(s) 42/52, bauxite feedstock 39 and the water. However, curing or ageing 60 of the agglomerate is understood as a time required to allow the hardening of the agglomerate through reactions between the cement binder(s) 42/52, bauxite feedstock 39 and the water present in mixture 59. The curing time after discharge into the stockpile will in a preferred embodiment be at least 1 hour, preferably at least 24 hours, preferably from 1 to 7 days, and will produce the bauxite agglomerate 69, fully cured. The bauxite agglomerate 69 has a composition of: 63 to 89.5 % w/w of dry crude bauxite; 0.5 to 7 % w/w of dry cement binder, and a moisture of 10 to 30 % w/w. If the feedstock bauxite 39 is at least 90 wt% sourced from crude bauxite tailings 14, the resulting bauxite agglomerate 69 has a composition of: 63 to 83 % w/w dry crude bauxite tailings; 2 to 7 % w/w dry cement binder and a moisture of 15 to 30 %.

A strong bauxite agglomerate according to the present invention offers a way of making previously unused fine bauxites/bauxite tailings into a valuable resource by overcoming material handling related transportation issues.

The invention is illustrated by the following non limiting examples. In all cases, the intensive mixing was conducted in an Eirich R02™ Mixer having a dry capacity of 3-5 liters up to 8 kg that includes a rotating mixing pan, designed to deliver the bauxite to mixing tools. The mixing tools include an eccentrically mounted impellor and a stationary multi-purpose tool. The multi-purpose tool is in this case a bottom/wall scraper that prevents caking on the side wall and the bottom, while improving discharge upon completion of a mixing cycle.

The Eirich mixer testing was conducted with a rotating pan and a counter-rotating agitator with two impellers spaced approximately 10 cm apart. The agitator of the Eirich R02™ Mixer has six different speed settings and the pan can be set at high or low speed, resulting in a total of twelve setting combinations. The agitator was set to a lower intensity setting corresponding to an agitator speed of approximately 900 rpm. Higher intensity mixing/agglomeration sometime produced undesired breakage of the larger diameter crude bauxite particles when present in the feedstock, that is to say when no screening or pre-screening step is applied. The rotating pan was set to the fastest rotational speed (84 rpm) to develop contact between the material and reagents.

Whilst all work described was conducted in batch operation, the process and full scale equipment would have been fully capable of continuous operation. For example, an Eirich DW40 conti ™ mixer could have been used for producing agglomerates with an estimated 211 tonnes per hour throughput rate, a 3 minutes residence time and a bulk density of 1.1 kg/L.

Addition of the binder in a first stage intensive mixing has resulted in homogeneous dispersion of the binder and water within the agglomerate. During the first stage agglomeration a bauxite sample, any additional agglomeration moisture and the required dosage of Ordinary Portland cement (OPC) binder were placed in the mixing pan for allowing its content to mix.

During a second stage mild agglomeration, a modified standard Shogun cement mixer (model 140071) was used. The mixer was modified to make a small scale drum agglomerator and was fitted with a cylindrical plastic barrel, or drum, with a ribbed rubber liner. The agglomeration drum was generally filled with 10 kg of sample. The mixer speed was set to 30 rpm with a drum inclined with an angle close to an horizontal position.

In all Examples, the residence time in the Eirich mixer was approximately 2 minutes, followed by a 105 seconds residence time in the drum agglomerator.

The agglomerates were cured under a load of 170 kPa, which is equivalent of a 10m high stockpile, for the first 24 hours. Curing was conducted at 30°C in load cells and there after sealed bags, for up to 7 days at ambient Australian temperatures, to simulate the temperature and humidity of a tropical location stockpile before flowability testing.

The agglomerate products where characterised by the following methodologies:
A Durham Cone test is used to determine how well a sample flows through an oscillating cone. The test allows a characterisation that can often be referred to as the flowability, that to say flowability under no load. The time taken for a known mass of material, in this case 15 kg, to flow out of the cone is measured and expressed as a specific flow time, Fs, expressed in second per kilogram. The equipment and the procedure used for this test are described in the standard AS 1038.25-2002, with the exception that a modified Durham Cone was used, by replacing the cone orifice of 115 mm of Figure 1 of the above-mentioned standard with an orifice of 75 mm. This modification of the equipment was made to achieve measurable bauxite particle flow times compared to the same measurements for coal and coke particles, for which the above-mentioned standard was originally provided. For each test, the machine was turned on and the cone oscillated for 10 seconds for allowing the material to consolidate before a trap door was opened and the time take for the material flow out recorded. The time taken for all the material to flow out was recorded. The tests were consistently conducted on 15.0 kg samples. Each 15.0 kg batch was tested five times unless the difference in flow time results exceeded 2 seconds, in which case 10 repeats were completed.

The flowability under load was characterised by using the methodology and equipment described under ASTM D6128-16 entitled "Standard Test Method for Shear Testing of Bulk Solids Using the Jenike Shear Tester". This test allows the measurement of an unconfined yield strength of samples under a range of consolidating pressures. These measurements were used to provide a flowability index, for comparing agglomerates with beneficiated bauxite. Each consolidation pressure was tested three times on 3.0 kg samples, for bauxite agglomerates, and 300 g samples, for agglomerates derived from crude bauxite tailings.

The above-mentioned shear testing involved three steps which were run for each sample.

In a first step, often referred to as "pre-consolidation" or "twisting", the sample was loaded into an eight inch diameter ring and a vertical load of between 330 and 550 kg, depending on the required consolidating pressure, which was being applied to the sample while twisting the sample with a lever arm. Without this first pre-consolidation step, the shear test would not reach steady state before it runs out of travel.

Then, in a second step, often referred to as "consolidation" or "steady state consolidation", a uniform density and steady shear state of the pre-consolidated sample were achieved.

Finally, in a third step, often referred to as "shear" or "failure", the yield condition of bulk solid was measured.

The Jenike shear cell flowability tests are superior to the Durham cone characterisation tests for flowability comparisons, as the analysis and therefore the demonstration of agglomerate robustness and strength is simulated under a range of consolidating loads experienced during bauxite transportation in the supply chain.

### Example 1 (comparative)

A mined crude Australian bauxite was treated at a beneficiation plant operation of Rio Tinto Aluminium, to produce a beneficiated bauxite and a crude bauxite tailings. The crude bauxite tailings were sent to a tailings storage facility (TSF), as a 25-30 weight % water slurry. The crude bauxite tailings, which have particle sizes less than 0.5 mm, were removed by washing, as their presence was causing significant issues in the supply chain handling processes.

A sample of the beneficiated bauxite was provided. The beneficiated bauxite had 10 weight % of particles having a particle size of less than 0.3 mm, a median particle size (d50) of 5 mm and 15 weight % moisture.

The sample was characterised using a Jenike shear cell flowability tests. By using a consolidating pressure varying between 38 and 153 kPa, the measured Jenike shear cell index range was 8.7 - 7.8, which categorises the material as "Easy Flowing".

The sample was then characterised using a Durham Cone test. During the test it was found that the material did not flow.

These results provide an example of beneficiated bauxite shipped from Cape York, Australia, with a typical median particle size of around 5 mm. The simple test parameters of the Durham Cone, with no consolidating load, and the sample characteristics did not produce conditions conducive to material flow for this sample. However, under Jenike shear testing at both low and high consolidating loads the material flows well.

### Example 2 (comparative)

A crude bauxite extracted from Lu'um Kwi mine in Australia was tested. This crude bauxite is typical of feedstock usually presented for beneficiation. A sample of the crude bauxite was provided, with 25 weight % of the particles having a particle size of less than 0.3 mm particles, a median particle diameter (d50) of 4 mm and a 12.3 weight % moisture.

For a consolidating pressure varying between 44 and 285 kPa, a Jenike shear cell index range of 2.6 - 3.7 was measured, which categorises the material as "Cohesive".

The Durham Cone test led to a flow time of 0.6 s/kg.

These results provide an example of un-beneficiated crude bauxite that is not readily handleable through existing conveyors and chutes at Cape York. The high content of moisture and of particles having a particle size of less than 0.5 mm prevented the bauxite to flow easily.

### Example 3

A 40.0 kg sample of the above-mentioned Lu'um Kwi crude bauxite, described in example 2, was split into 2.5 kg batches.

Each 2.5 kg batch was then combined with 30.0 g of water to meet a total moisture content of 13.3 weight %. Then, a binder charge of 43.85 g of OPC was mixed with each batch in an Eirich R02 mixer for 2 minutes to meet a target of 2 weight %, defined as a weight % of dry bauxite. Four batches, that is to say a total of 10.3 kg of the resulted mixtures, were combined and agglomerated in the second stage drum agglomerator, in this case the above-mentioned modified standard Shogun cement mixer, for 105 seconds. Once all 40.0 kg of the bauxite had been agglomerated, the resultant agglomerates were cured in a load cell, in sealed bags, under a pressure of 140 kPa and at a temperature of 30 C, for 24 hrs, and then at ambient temperature without any load for a further 6 days.

After such treatment, the agglomerated product had no particles or agglomerates of less than 0.7 mm and a median agglomerate diameter (d50) of 6 mm.

By using a consolidating pressure varying between 23 - 140 kPa the measured Jenike shear cell index range was 4.6 - 4.4, which categorises the material as "Easy Flowing".

The Durham Cone test led to a flow time of 0.4 s/kg.

These results show that a satisfactory agglomerate was produced and that performance compared to the crude bauxite in example 2, which was not agglomerated, was superior. In terms of flowability, these results resembles to the desirable characteristics and performance of the beneficiated bauxite of the example 1, including but not limited to the significant reduction in fine particles and increase in d50 size, which was also not agglomerated. It shows that by using the agglomeration process of the present invention, there is no need to beneficiate the crude bauxite for obtaining acceptable material handling properties.

### Example 4

A 20 kg sample of crude bauxite tailings extracted from Andoom mine in Australia was used. 100 weight % of the particles of the crude bauxite tailings had a particle size less than 0.3 mm, a median particle diameter (d50) of 100 µm, and a total moisture content of 20 weight %.

The sample was agglomerated, with no additional water. A binder charge of 100 g of OPC was mixed with each of 2.5 kg batches in an Eirich R02 mixer for 2 minutes to meet a target binder charge of 5 weight % of dry bauxite. The resulted mixtures were combined and agglomerated in the same second stage drum agglomerator as in Example 3, under the same conditions as described in Example 3. The resultant product agglomerates in a load cell, in sealed bags, under a pressure of 140 kPa and at a temperature 30°C, for 24 hrs, and then at ambient temperature without any load for a further 6 days.

After such treatment, the agglomerated product had no particles or agglomerates of less than 0.3 mm and a median agglomerate diameter (d50) of 4 mm.

By using a consolidating pressure varying between 15 - 180 kPa, the measured Jenike shear cell index range was 25 - 5.4, which categorises the material between "Free Flowing" and "Easy Flowing".

The Durham Cone test led to a flow time of 0.5 s/kg.

These results show a satisfactory agglomerate was produced and that performance compared to the beneficiated bauxite in Example 1, which was not agglomerated, is similar or superior. Without wishing to be bound by any particular theory, it is believed that the superior Jenike shear cell index obtained, by comparison to the crude bauxite agglomerates tested in Example 3, results from a strong uniform internal agglomerate structure, less susceptible to shearing compared to the structure of an agglomerated shell over the spheroidal bauxite particle (pisolite) at the core.

### Example 5

20 kg sample of a blend of 60 wet weight % of Andoom bauxite tailings and 40 wet weight % of Rikarra crude bauxite was prepared, with no additional water.

The Andoom bauxite tailings had 100 weight % of particles having a particle size of less than 0.5mm, a median particle diameter (d50) of 100 µm, and 25 weight % of moisture. The Rikarra crude bauxite had 60 weight % particles having a particle size of less than 0.3 mm particles, a median particle diameter (d50) of 200 µm, and 10 weight % of moisture. On a combined mass basis the sample had 19 weight % moisture.

A binder charge of 101.2 g of OPC was mixed with each 2.5 kg batch of bauxite sample to meet a target binder charge of 5 weight %, defined as a weight % of dry bauxite.

The resulted mixture was agglomerated using the same equipment and under the same condition as in example 3. The resulting product agglomerates were cured in a load cell under a pressure of 140 kPa and at a temperature 30 C, for 24 hrs before testing.

After such treatment, the agglomerated product had no particles or agglomerates of less than 0.3 mm and a median agglomerate diameter (d50) of 4 mm.

By using a consolidating pressure varying between 14 - 140 kPa, the measured Jenike shear cell index range was 15.8 - 6.7, which categorises the material between "Free Flowing" and "Easy Flowing".

Similarly to Example 4, the product and performance compared to the beneficiated bauxite in Example 1 is similar or superior. This example demonstrates the blending of ores and tailings to achieve suitable agglomeration products for transportation.

## Claims

1. A process (100 ; 200) for producing a bauxite agglomerate (69) comprising:
providing (10) at least one crude bauxite (12, 14, 16) having an initial weight % of water as a feed bauxite (19, 29 ; 29);
optionally screening (20) said feed bauxite (19) or pre-screening (21) at least part of said crude bauxite (12, 14, 16) to bypass coarse particles (23) around said process (100 ; 200);
optionally adjusting (30) a weight % of water of the feed bauxite (19, 29) after an optional screening (20) or pre-screening (21),
the process is **characterized by**
providing a cement binder (42, 52) and a feedstock bauxite (39) based on said feed bauxite (19, 29), after the optional screening (20) or pre-screening (21) and/or after an optional water adjustment (30);
mixing (40, 50) the feedstock bauxite (39) with the cement binder (42, 52) in at least one mixer under intensive mixing conditions producing a bauxite binder mixture; and
curing (60) the bauxite binder mixture (59) for a cure time thereby allowing the cement binder through a reaction with the water in the bauxite binder mixture to cure and form the bauxite agglomerate (69).

2. The process of claim 1, **characterized in that** the weight % of water in the feedstock bauxite (39), after an optional water adjustment (30), is between 10 and 30 % w/w.

3. The process of claim 1 or 2, **characterized in that** the weight % of water in the feedstock bauxite (39), after an optional water adjustment, is
- between 10 and 20 % w/w, preferably 12 and 15 % w/w, more preferably 12 and 14 % w/w, or most preferably approximately 13 % w/w, when the feed bauxite (19, 29) comprises at least 90 weight % of crude mined bauxite,
- between 15 and 30 % w/w, preferably approximately 18 to 20 % w/w, when the feed bauxite (19, 29) comprises at least 90 weight % of crude bauxite tailings,
- between 10 and 30 % w/w, when the feed bauxite (19, 29) comprises at least 90 weight % of a blend of crude mined bauxite and crude bauxite tailings.

4. The process of any one of claim 1 to 3, **characterized in that** said adjusting of the weight % of water is by adding water to the feed bauxite (19, 29).

5. The process of any one of claims 1 to 4, **characterized in that** the cement binder (42, 52) is a Portland cement, preferably a general purpose ordinary Portland cement.

6. The process of any one of claims 1 to 5, **characterized in that** the cement binder (42, 52) mixed with the feedstock bauxite (39), after an optional water adjustment, is in a range of 0.5 to 7 % w/w of the bauxite binder mixture.

7. The process of any one of claims 1 to 6, **characterized in that** the at least one mixer is an intensive mixer.

8. The process of any one of claim 1 to 7, **characterized in that** the at least one mixer comprises a second mixer agglomerating the bauxite binder mixture from the at least one mixer under milder mixing conditions.

9. The process of claim 8, **characterized in that** the milder mixing conditions are produced by the second mixer, which is a drum agglomerator, preferably operating at 30 rpm.

10. The process of any one of claims 1 to 9, **characterized in that** the cure time is at least 1 to 24 hours, preferably at least 24 hours, most preferably from 1 to 7 days.

11. A flowing bauxite agglomerate **characterized by** a composition of:
- 63 to 89.5 % w/w of dry crude bauxite feedstock;
- 0.5 to 7 % w/w of dry cement binder, and
- a moisture of 10 to 30 % w/w.

12. The flowing bauxite agglomerate according to claim 11, **characterized by** a composition of:
- 75 to 89.5 % w/w of a dry crude bauxite feedstock, which contains at least 90 % of crude mined bauxite;
- 0.5 to 5 % w/w of dry cement binder, and
- a moisture of 10 to 20 % w/w, preferably 13 % to 17 % w/w.

13. The flowing bauxite agglomerate according to claim 11, **characterized by** a composition of:
- 63 to 83 % w/w of a dry crude bauxite feedstock, which contains at least 90 % of crude bauxite tailings;
- 2 to 7 % w/w of dry cement binder, and
- a moisture of 15 to 30 % w/w, preferably 18 to 20 % w/w.

14. The flowing bauxite agglomerate according to any one of claims 11 to 13, **characterized by** a median agglomerate size of approximately 3 to 8 millimeters.

15. The flowing bauxite agglomerate composition according to any one of claims 11 to 14 **characterized by** a Durham Cone flowability index of less than 1.0 s/kg, preferably of less than 0.6 s/kg, and most preferably by a Jenike Shear Cell flowability index greater than 4.

16. Use of a bauxite agglomerate of any one of claims 11 to 15, in a Bayer process producing alumina, **characterized in that** feeding the bauxite agglomerate to an alumina refinery and optionally mixing the bauxite agglomerate with a beneficiated bauxite.
